(19) **Europäisches Patentamt / European Patent Office / Office européen des brevets**

(11) **EP 3 367 284 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(21) Anmeldenummer: **17210735.1**

(22) Anmeldetag: **27.12.2017**

(51) Int Cl.:
*G06F 21/34* (2013.01)   *G06F 21/60* (2013.01)
*H04L 9/00* (2006.01)   *H04W 12/02* (2009.01)
*H04L 29/08* (2006.01)   *H04W 4/80* (2018.01)
*H04L 9/32* (2006.01)   *H04W 12/00* (2021.01)
*H04W 12/03* (2021.01)

(54) **ZUGANGSKONTROLLVORRICHTUNG UND VERFAHREN ZUR AUTHENTISIERUNG EINER ZUGANGSBERECHTIGUNG**

ACCESS CONTROL DEVICE AND METHOD FOR AUTHENTICATING ACCESS AUTHORIZATION

DISPOSITIF DE COMMANDE D'ACCÈS ET PROCÉDÉ D'AUTHENTIFICATION D'UNE AUTORISATION D'ACCÈS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2017 DE 102017202953**

(43) Veröffentlichungstag der Anmeldung:
**29.08.2018 Patentblatt 2018/35**

(73) Patentinhaber: **Bundesdruckerei GmbH**
**10969 Berlin (DE)**

(72) Erfinder:
• **Bastian, Paul**
**10243 Berlin (DE)**
• **Morgner, Frank**
**15537 Grünheide (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
**US-A1- 2008 162 934    US-A1- 2010 257 588**
**US-A1- 2011 170 692**

• **SALOWEY H ZHOU CISCO SYSTEMS P ERONEN NOKIA H TSCHOFENIG NOKIA SIEMENS NETWORKS J: "Transport Layer Security (TLS) Session Resumption without Server-Side State; rfc5077.txt", TRANSPORT LAYER SECURITY (TLS) SESSION RESUMPTION WITHOUT SERVER-SIDE STATE; RFC5077.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. Januar 2008 (2008-01-01), XP015055149,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die vorliegende Erfindung betrifft eine Zugangskontrollvorrichtung und ein Verfahren zur Authentisierung einer Zugangsberechtigung.

**Beschreibung des Standes der Technik**

Verfahren zur Authentisierung, d.h. zur Überprüfung der Identität und Authentizität eines Kommunikationspartners, sowie zur Durchführung derartiger Verfahren geeignete Zugangskontrollsysteme sind bekannt.
So ist aus der DE 10 2015 202 308 A1 ein Zugangsverfahren zur Aushandlung eines verschlüsselten Kanals, der für die Zugangskontrolle benutzt wird, bekannt. In dem bekannten Verfahren werden unter Verwendung von jeweiligen asymmetrischen Schlüsseln ausgehandelte symmetrische Sitzungsschlüssel in einem Terminal des Zugangskontrollsystems einerseits und in dem ID-Token (Zugriffstoken) andererseits persistent gespeichert und bei der nächsten Kommunikation erneut verwendet. Hierzu gibt sich der Zugriffstoken bei der nächsten physischen Sitzung mittels seiner eindeutigen Kennung (UID: Unique ID) gegenüber dem Terminal zu erkennen, welches den alten symmetrischen Sitzungsschlüssel anhand der UID aus seinem Speicher ermittelt und verwendet. Der Zugriffstoken seinerseits kann den entsprechenden Schlüssel anhand der eindeutigen Terminal-Kennung aus seinem Speicher laden.
Aus der US 2008/162934 A1 ist ein System zur Kommunikation zwischen einem Server und einem oder mehreren Clients bekannt, bei dem Einmal-IDs ("one time IDs") verwendet werden.
Das Dokument Salowey et al: "Transport Layer Security (TLS) Session Resumption without Server-Side State; rfc5077.txt" betrifft eine clientseitige Speicherung des sessionspezifischen Status.

**Zusammenfassung der Erfindung**

Ausgehend hiervon werden erfindungsgemäß ein Verfahren zur Authentisierung einer Zugangsberechtigung mit den Merkmalen der Ansprüche 1, 3 und 5, ein Computerprogramm mit den Merkmalen des Anspruchs 10, ein ID-Token mit den Merkmalen des Anspruchs 11, ein Terminal mit den Merkmalen des Anspruchs 12 sowie ein Zugangskontrollsystem mit den Merkmalen des Anspruchs 13 vorgeschlagen.
Die Erkenntnis der Erfindung liegt darin begründet, beim Speichern von Sitzungskontexten für eine Wiederherstellung einer zukünftigen gesicherten Verbindung zwischen den Sitzungspartnern auf eine eindeutige Kennung des zugreifenden ID-Tokens zu verzichten und stattdessen ein sitzungsspezifisches randomisiertes Attribut zu erzeugen, das zumindest in dem Terminal unter Zuordnung zu einem eigenen spezifischen Sitzungskontext gespeichert wird.
Das erfindungsgemäße Vorgehen unterbindet eine Nachverfolgbarkeit des ID-Tokens, da nicht mehr stets dieselbe eindeutige Kennung verwendet wird, sondern sich das randomisierte Attribut von einer physischen Sitzung zur nächsten Sitzung ändert. Das heißt, dass bei derartigen Ausführungsformen der Erfindung der ID-Token und das Terminal in einer jeweiligen physischen Sitzung verabreden, unter Verwendung welchen randomisierten Attributs sich der ID-Token dem Terminal bei der nächsten physischen Sitzung zu erkennen geben wird. Da dies verschlüsselt vollzogen wird, scheidet eine Nachverfolgung des ID-Tokens somit aus. Dies bedeutet, dass eine logigung des ID-Tokens somit aus. Dies bedeutet, dass eine logische Sitzung zwischen den Sitzungspartnern in einer späteren, neu hergestellten physischen Sitzung fortgesetzt werden kann.
Das erfindungsgemäße randomisierte Attribut muss zudem nicht in dem ID-Token gespeichert werden, da es ausreichend ist, wenn der ID-Token über die der Berechnung des randomisierten Attributs zugrundeliegenden Parameter verfügt und auf dieser Grundlage das randomisierte Attribut berechnen kann. Alternativ kann das randomisierte Attribut in dem Terminal und in dem ID-Token jeweils unter Zuordnung zu einem eigenen spezifischen Sitzungskontext gespeichert werden.
Zu einer Wiederherstellung einer Sitzung zwischen dem Terminal und dem ID-Token gibt sich das Terminal dem ID-Token gegenüber eindeutig anhand der eindeutigen Terminal-Kennung zu erkennen (was im Sinne der Erfindung unschädlich ist, da ein Terminal üblicherweise ortsfest installiert und eine Nachverfolgung somit sinnlos ist). Der ID-Token ermittelt dann anhand der eindeutigen Terminal-Kennung aus seinem Speicher den passenden Sitzungskontext, auf dessen Grundlage die Sitzung zwischen dem Terminal und dem ID-Token wiederhergestellt werden kann.
Zudem ermittelt der ID-Token das zu dem Sitzungskontext gehörige randomisierte Attribut und sendet dieses (als Antwort auf die eindeutige Terminal-Kennung) an das Terminal. Das Ermitteln des randomisierten Attributs kann durch Auslesen aus dem Speicher (sofern das randomisierte Attribut in dem ID-Token gespeichert ist) oder durch Berechnen erfolgen. Das Terminal wiederum kann anhand des randomisierten Attributs seinen zugehörigen Sitzungskontext ermitteln und laden und ist nun ebenfalls für eine Reaktivierung der Sitzung bereit. Die weitere Kommunikation zwischen Terminal und ID-Token kann dann gesichert anhand (symmetrischer) Verschlüsselung ablaufen. Sollte ein abhörender Dritter das randomisierte Attribut abhören, wird ihm dieses "zufällig" und nicht zuordenbar erscheinen, womit es für eine Nachverfolgung wertlos ist.

Ein "sitzungskontextbezogenes" Ermitteln des zugehörigen Attributs durch den ID-Token bedeutet somit ein Ermitteln des der eindeutigen Terminal-Kennung zugeordneten Sitzungskontextes und des zugehörigen Attributs. Das Ermitteln des zugehörigen Attributs kann durch Speicherabfrage erfolgen, sofern das Attribut mit dem Sitzungskontext in dem ID-Token gespeichert ist, oder durch Berechnung des Attributs aus in dem Sitzungskontext enthaltenen vereinbarten Daten.

Die Berechnung des erfindungsgemäßen randomisierten Attributs kann entweder sowohl auf dem Terminal als auch dem ID-Token erfolgen oder nur auf dem ID-Token oder dem Terminal, wobei dann das berechnete randomisierte Attribut an den jeweils anderen Kommunikationspartner gesendet wird. Das erstgenannte Vorgehen ist mit dem Vorzug verbunden, dass auch im Falle eines möglichen Abbruchs der Sitzung vor einem Übersenden des berechneten randomisierten Attributs bei beiden Kommunikationspartnern ein für die Wiederherstellung der Sitzung befähigendes Sicherheitsmerkmal vorhanden ist, das zweitgenannte Vorgehen hat den Vorzug, dass Sicherheit darüber besteht, dass bei beiden Kommunikationspartnern das identische randomisierte Attribut vorliegt.

Das erfindungsgemäße randomisierte Attribut kann bspw. auf der Grundlage eines an sich bekannten Sendefolgezählers, der von Sitzung zu Sitzung, ggf. pseudozufällig, inkrementiert wird, erzeugt werden. Darüber hinaus sollte ein für die beiden Kommunikationspartner eindeutiges (Sitzungs-)Merkmal als Grundlage für die Berechnung des randomisierten Attributs verwendet werden. Dabei kann es sich bspw. um den gemeinsamen (symmetrischen) Sitzungsschlüssel des gesicherten Kommunikationskanals zwischen Terminal und ID-Token, eine aus dem Schlüssel abgeleitete oder extrahierte geheime Information oder eine zwischen den beiden vereinbarte sonstige Zufallszahl handeln. Zusätzliche Erkennungsmerkmale, wie insbesondere die eindeutige Terminal-Kennung, können möglicherweise gleichfalls in die Berechnung einfließen.

Die Berechnung bzw. Erzeugung des (aktualisierten) randomisierten Attributs kann nach (Wieder-)Herstellung einer Sitzung zwischen Terminal und ID-Token erfolgen, bspw. basierend auf einem inkrementierten Sendefolgezähler. Auf diese Weise wird sichergestellt, dass selbst im Falle einer Unterbrechung des gesicherten Kommunikationskanals während der folgenden Sitzung die Grundlagen für eine erfolgreiche Wiederherstellung der Sitzung geschaffen sind.

Die vorliegende Beschreibung deckt auch ein Computerprogramm mit Programmcode ab, der dazu geeignet ist, ein erfindungsgemäßes Verfahren auszuführen, wenn das Computerprogramm auf ID-Token bzw. einem Terminal eines Zugangskontrollsystems abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

**Kurzbeschreibung der Zeichnung**

Figur 1 zeigt in stark schematische Blockdarstellung ein erfindungsgemäßes Zugangskontrollsystem.

Figur 2 zeigt stark schematisiert einen Ablaufplan (Flussdiagramm) eines erfindungsgemäßen Verfahrens.

Figur 3 zeigt drei Varianten des Schrittes S210 der Darstellung der Figur 2.

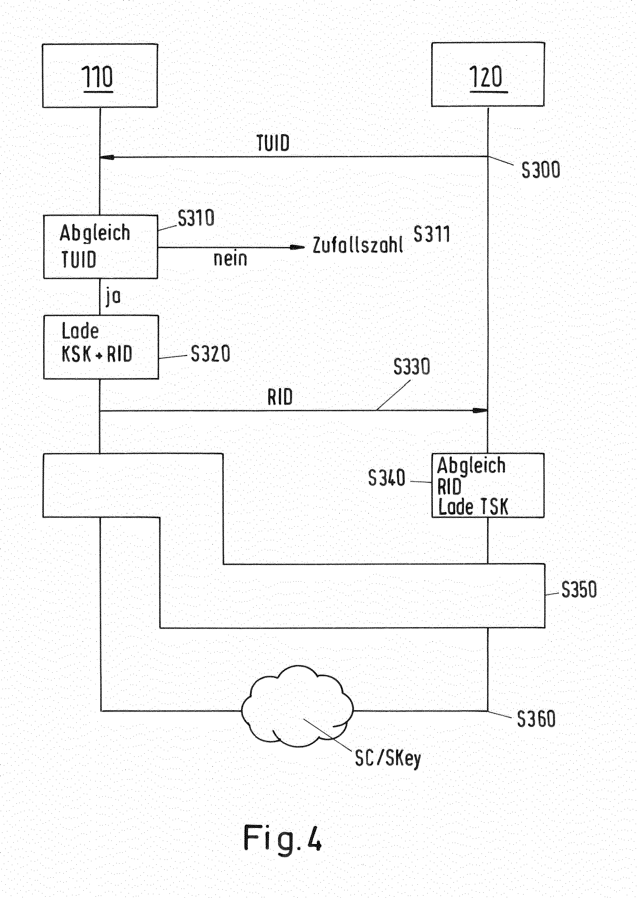

Figur 4 zeigt stark schematisiert einen Ablaufplan (Flussdiagramm) eines erfindungsgemäßen Verfahrens zu einer Wiederherstellung einer Sitzung zwischen den Sitzungsteilnehmern des Ablaufs der Figur 2.

**Ausführliche Beschreibung**

Gleiche und ähnliche in den einzelnen Figuren dargestellte Merkmale sind mit gleichen Bezugszeichen bezeichnet.

Im Sinne der vorliegenden Erfindung bezeichnet der Begriff "ID-Token" eine Vorrichtung, wie beispielsweise ein tragbares elektronisches Gerät, zum Beispiel einen sogenannten USB-Stick, oder ein Dokument, insbesondere ein Wert- oder Sicherheitsdokument. Unter einem "Dokument" werden papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Unter einem "Attribut" wird im folgenden ein Datenwert, zum Beispiel eine Zahl oder ein Text, verstanden.

Ein Zugangskontrollsystem bezeichnet im Rahmen der vorliegenden Beschreibung eine Einrichtung bzw. Vorrichtung, die den Zugang zu bestimmten räumlichen Bereichen oder auch den Zugriff auf bestimmte Daten kontrolliert. Ein Zugriff ist nur nach Nachweis einer entsprechenden Berechtigung mittels des ID-Tokens möglich.

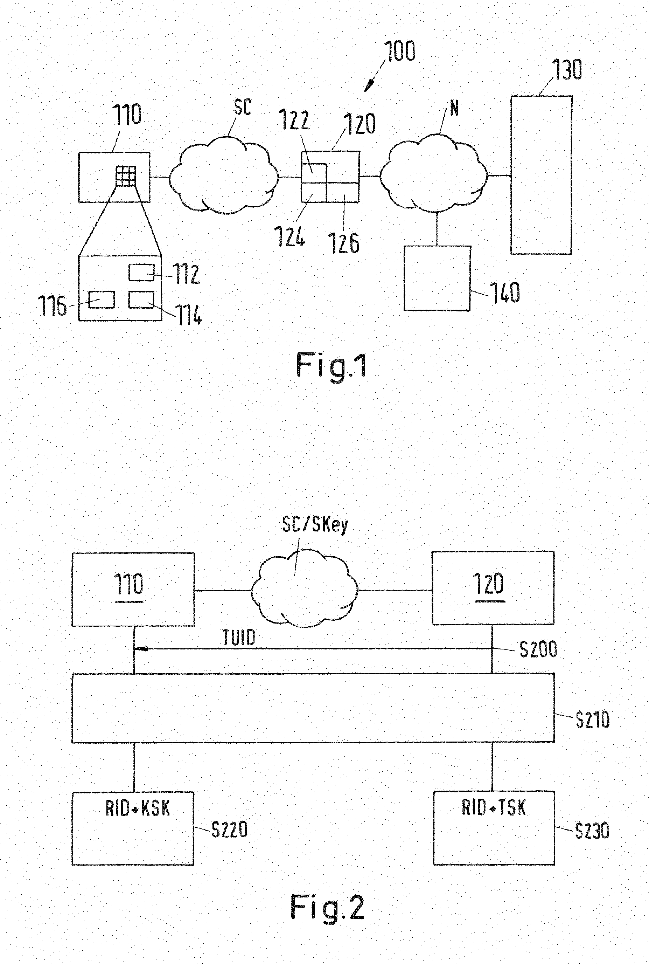

Figur 1 zeigt in stark schematisierter Blockdarstellung ein erfindungsgemäßes Zugangskontrollsystem bzw. eine Zugangskontrollvorrichtung 100. Das Zugangskontrollsystem umfasst einen ID-Token 110 und ein Terminal 120, das über ein Netzwerk N mit einer Sicherungsanlage 140 verbunden ist.

Der ID-Token 110 umfasst eine Kommunikationsschnittstelle 112, einen Prozessor 114 und einen Speicher 116. In ähnlicher Weise umfasst das Terminal 120 eine Kommunikationsschnittstelle 122, einen Prozessor 124 und einen Speicher 126. Der ID-Token 110 und das Terminal 120 sind dazu ausgebildet, mittels ihrer Kommunikationsschnittstellen 112, 122 unter Ausbildung eines gesicherten Kommunikationskanals SC miteinander zu kommunizieren.

Die Kommunikation zwischen dem ID-Token 110 und dem Terminal 120 kann drahtgebunden oder drahtlos durchgeführt werden, bspw. kann es sich um eine Nahfeldkommunikation mittels RFID, WLAN oder dergleichen handeln. Ebenso können der ID-Token 110 und das Terminal 120 über ein Kommunikationsnetzwerk kommunizieren, beispielsweise über dasjenige, mittels welchem das Terminal 120 mit der Sicherungsanlage 140 verbunden ist. Jedes Netzwerk kann drahtgebunden oder drahtlos ausgebildet sein.

Die Sicherungsanlage 140 kann bspw. zur Sicherung des Zugriffs auf oder Zutritt in einen sensitiven Bereich dienen. Dabei kann es sich um einen räumlichen Bereich handeln, in welchem Falle die Sicherungsanlage bspw. als Schließsystem ausgebildet ist, oder es kann sich um einen Datenbereich (Datenbankzugriff) handeln, zu welchem die Sicherungsanlage den Zugriff kontrolliert.

Der ID-Token 110 dient als "Schlüssel", um den Zutritt zu der Sicherungsanlage zu erlangen.

Das Terminal 120 kann darüber hinaus - wie in dem Ausführungsbeispiel der Figur 1 dargestellt - mit einem Server bzw. Host-Computer 130 verbunden sein, um gegebenenfalls auf zentrale Daten, die im Zusammenhang mit der Authentisierung und/oder der Kommunikation mit dem ID-Token 110 erforderlich sind, zugreifen zu können.

Die Ausgestaltung der Funktionsmodule (Prozessor, Schnittstelle, Speicher) des ID-Tokens 110 wird im folgenden nicht genauer beschrieben, da diese im Bereich des fachmännischen Könnens liegt. So ist es dem Fachmann bspw. ohne weiteres geläufig, bei der Gestaltung des Speichers 116 des ID-Tokens 110 auf die üblicherweise verwendeten Speicherarten (RAM, ROM, EEPROM) zurückzugreifen.

Figur 2 veranschaulicht den Ablauf des erfindungsgemäßen Vorgehens. Die Darstellung des Verfahrensablaufs der Figur 2 beginnt zu einem Zeitpunkt, zu dem zwischen dem ID-Token 110 und dem Terminal 120 bereits ein gesicherter Kommunikationskanal SC eingerichtet ist. Die Etablierung des gesicherten Kommunikationskanals SC kann in einer dem Fachmann an sich bekannten Art und Weise erfolgen. Insbesondere kann die Etablierung des gesicherten Kommunikationskanals SC unter Aushandlung eines gemeinsamen (symmetrischen) Sitzungsschlüssels SKey ausgehend von jeweiligen asymmetrischen Schlüsselpaaren wie bspw. aus der DE 10 2015 202 308 A1 bekannt erfolgen.

In einem Schritt S200 übermittelt das Terminal 120 dem ID-Token 110 eine eindeutige Terminal-Kennung TUID. Die Übermittlung der Terminal-Kennung TUID erfolgt erfindungsgemäß bereits im Rahmen der Aushandlung des gemeinsamen Sitzungsschlüssels SKey, so dass der ID-Token 110 in dieser Phase auf die bereits vorliegende Terminal-Kennung zurückgreifen kann. Ggf. wird in Erwägung gezogen, dass das Terminal 120 zu diesem Zeitpunkt die Terminal-Kennung erneut übermittelt (bspw. um den nächsten Schritt der Berechnung des erfindungsgemäßen randomisierten Attributs zu triggern).

In einem Schritt S210 wird nun das erfindungsgemäße randomisierte Attribut RID berechnet, bei dem es sich um eine Zufalls-ID der gemeinsamen Sitzung zwischen dem ID-Token 110 und dem Terminal 120 handelt. Das randomisierte Attribut kann bspw. auch als "One-Time Session Identifier" bezeichnet werden.

Erfindungsgemäß wird das randomisierte Attribut als Zufalls-Code (Hash) aus einem gemeinsamen Geheimnis der beiden Sitzungspartner berechnet, wie bspw. dem gemeinsamen Sitzungsschlüssel SKey oder einem anderen daraus abgeleiteten Geheimnis wie z.B einem Wiederherstellungsschlüssel (Renegotiation Key) :

$$\text{RID = Random-Hash[SKey]}$$

Die Berechnung kann mittels einer kryptographischen Hash-Funktion, einem MAC (Message Authentication Code) oder einer anderen vergleichbaren nicht-invertierbaren Funktion erfolgen.

Die Randomisierung kann bspw. durch einen Sendefolgezähler SSC als sich von Sitzung zu Sitzung änderndes Element erreicht werden, so dass sich die Berechnung des randomisierten Attributs wie folgt darstellen lässt:

$$RID = Hash[SSC, SKey]$$

Als zusätzliche Festlegung auf ein gegebenes Sitzungpartnerpaar kann bspw. die eindeutigen Terminal-Kennung in die Attributsberechnung mit einfließen:

$$RID = Hash[SSC, SKey, TUID]$$

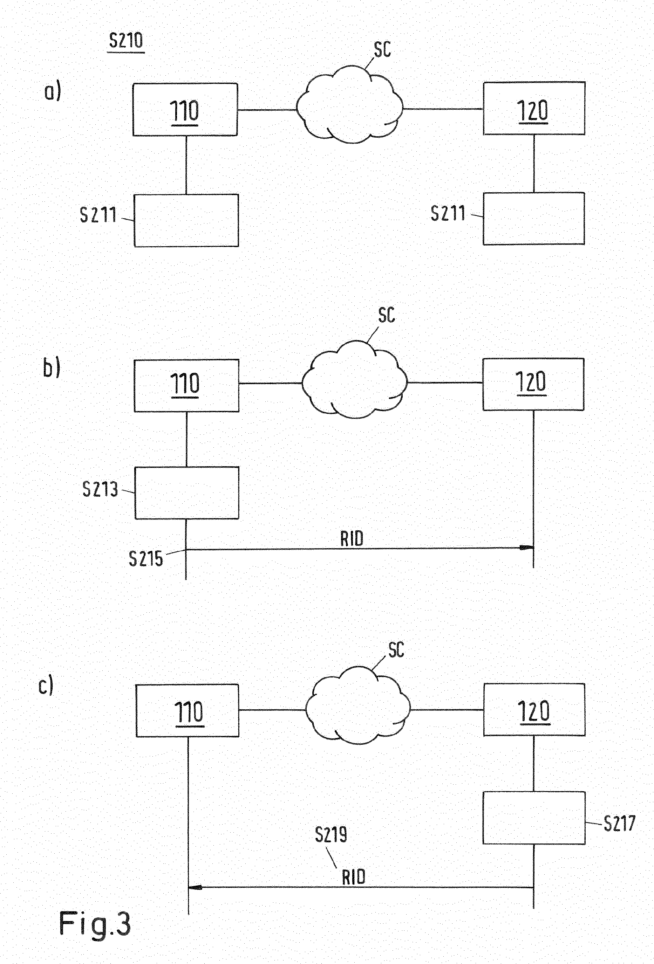

Die Berechnung des randomisierten Attributs kann parallel sowohl auf dem ID-Token 110 als auch dem Terminal 120 erfolgen (vgl. Schritt S211 der Figur 3a). Alternativ kann die Berechnung nur auf dem ID-Token 110 erfolgen (Schritt S213 der Figur 3b), und der ID-Token 110 sendet die berechnete RID in einem anschließenden Schritt S215 an das Terminal 120, oder die Berechnung erfolgt nur auf dem Terminal 120 (Variante der Figur 3c, Schritt S217) und das Terminal sendet die berechnete RID anschließend an den ID-Token 110 (Schritt S219).

In der in den Figuren beschriebenen Ausführungsvariante der Erfindung speichern beide Sitzungpartner 110, 120 anschließend das berechnete randomisierte Sitzungsattribut RID in ihrem jeweiligen Speicher 116 bzw. 126. Erfindungsgemäß erfolgt die Speicherung unter Zuordnung zu dem jeweiligen Sitzungskontext: so speichert der ID-Token 110 in einem Schritt S220 das randomisierte Attribut RID unter Zuordnung zu seinem Kartensitzungskontext KSK, und das Terminal 120 speichert in einem Schritt S230 das randomisierte Attribut RID unter Zuordnung zu seinem Terminalsitzungskontext TSK. Wie bereits voranstehend beschrieben, kann alternativ das randomisierte Sitzungsattribut nur in dem Terminal unter Zuordnung zu dem Terminalsitzungskontext TSK gespeichert werden, während auf eine Speicherung des randomisierten Attributs in dem ID-Token verzichtet wird. In dem ID-Token wird dann lediglich der Sitzungskontext KSK des ID-Tokens (der auch wie nachstehend beschriebene die eindeutige Terminal-Kennung umfasst) gespeichert.

Ein Sitzungskontext stellt im Rahmen der vorliegenden Erfindung eine Sammlung von Daten dar, die benötigt werden, um einen sicheren Sitzungskanal SC bzw. eine sichere Sitzung sicher wiederherzustellen, und umfasst zumindest den gemeinsamen Sitzungsschlüssel und die eindeutige Terminal-Kennung TUID. Weitere Daten oder Geheimnisse der sicheren Sitzung können enthalten sein, wie bspw. ein asymmetrischer Schlüssel.

Zu einer Wiederherstellung einer (regulär) beendeten oder unterbrochenen/abgebrochenen Sitzung treten der ID-Token 110 und das Terminal 120 mittels ihrer jeweiligen Kommunikationsschnittstellen 112, 122 in Kontakt. Das Terminal 120 sendet dem ID-Token 110 in einem Schritt S300 zur Identifizierung eine eindeutige Terminal-Kennung TUID.

Der ID-Token 110 gleicht die empfangene Terminal-Kennung TUID mit dem Inhalt seines Speichers 116 ab (Schritt S310). Findet der ID-Token 110 die eindeutige Terminal-Kennung TUID in seinem Speicher 116, so lädt er den Sitzungskontext KSK, in dem die Kennung TUID enthalten ist, sowie - falls wie voranstehend beschrieben abgespeichert - das diesem Sitzungskontext KSK zugeordnete randomisierte Attribut RID (Schritt S320). Im alternativen Falle, nämlich wenn das randomisierte Attribut RID nicht in dem Speicher des ID-Tokens gespeichert ist, ermittelt der ID-Token das randomisierte Attribut RID zu diesem Zeitpunkt durch die voranstehend beschriebene Berechnung anhand der hierfür notwendigen und im Sitzungskontext KSK enthaltenen Daten.

Findet der ID-Token die eindeutige Terminal-Kennung in seinem Speicher nicht, kann der ID-Token bspw. eine beliebige Zufallszahl generieren und an das Terminal senden (Schritt S311). Insbesondere wenn diese Zufallszahl ein dem randomisierten Attribut entsprechendes Format aufweist, bleibt der ID-Token auf diese Art und Weise unverfolgbar. Das Terminal kann mit diesem Zufallsdatensatz ebenfalls keinen zugehörigen Sitzungskontext ermitteln und führt das ausführliche asymmetrische Protokoll zur Aushandlung (neuer) symmetrischer Schlüssel durch. Vorzugsweise erfolgt die Berechnung auf der Seite des ID-Tokens hierbei mit den zufälligen Daten in identischer Weise wie im Erfolgsfall, um für einen Verfolger keine Rückschlüsse anhand der Berechnungszeit zuzulassen, ob die Reaktivierung erfolgreich war oder nicht.

In einem nächsten Schritt S330 sendet der ID-Token 110 das ermittelte und geladene randomisierte Attribut RID an das Terminal 120. Das Terminal 120 gleicht das empfangene Attribut mit seinem Speicherbestand ab und lädt den diesem Attribut in seinem Speicher zugeordneten Terminal-Sitzungskontext TSK.

Beiden Sitzungspartnern liegen durch Laden der jeweiligen Sitzungskontexte nun alle für eine Wiederherstellung der Sitzung (bzw. des gesicherten Kommunikationskanals) notwendigen Daten vor, insbesondere der Sitzungsschlüssel SKey, so dass die Sitzung in einem Schritt S360 wieder hergestellt werden kann und anschließend Daten ausgetauscht werden können.

Außerdem wird nach dem erfolgreichen Laden der Sitzungskontexte (Schritte S320, S340) der Sendefolgezähler SSC inkrementiert und auf der Grundlage des inkrementierten Sendefolgezählers ein aktualisiertes randomisiertes Sitzungsattribut RID berechnet (vgl. Schritt S350):

$$RIDneu = Hash[SSC+i, SKey, TUID]$$

Der Schritt S350 der erneuten Attributsberechnung kann gleichzeitig sowohl auf dem ID-Token 110 als auch dem Terminal 120 ausgeführt werden, bspw. wenn der ID-Token 110 von dem Terminal 120 eine Bestätigung über das erfolgreiche Ausführen des Schritts S340 (Laden des zugehörigen Terminal-Sitzungskontextes) empfängt. Alternativ kann der Schritt S350 zeitverschoben ausgeführt werden, da der ID-Token 110 vor dem Terminal 120 über die zur Neuberechnung notwendigen Daten verfügt. Analog zu der Darstellung der Figur 3 kann auch die Neuberechnung des randomisierten Attributs entweder nur auf dem ID-Token oder nur auf dem Terminal erfolgen.

Das Terminal 120 führt eine lokale Kopie des Sendefolgezählers. Aus Gründen der Redundanz kann der ID-Token 110 den Sendefolgezähler (unmittelbar) nach Laden des randomisierten Attributs (Schritt S320) inkrementieren und den inkrementierten Sendefolgezähler in Schritt S330 gemeinsam mit dem geladenen Attribut an das Terminal 120 übermitteln.

Unter dem voranstehend beschriebenen Inkrementieren des Sendefolgezählers ist eine vereinbarte bzw. definierte schrittweise Änderung des Zählers zu verstehen. Der dem Fachmann an sich bekannte Sendefolgezähler wird bei der sicheren Kommunikation bei Eingang/Ausgang einer Nachricht üblicherweise um "1" erhöht. Zur (zusätzlichen) erfindungsgemäßen Nutzung eines (ohnehin vorhandenen) Sendefolgezählers für die Erzeugung eines randomisierten Attributs kann daher für die diesbezügliche Inkrementierung eine von "1" abweichende Vereinbarung getroffen werden, bspw. eine pseudozufällige Inkrementierung oder bspw. eine Inkrementierung um Vielfache von 256 (sollten im Rahmen einer Sitzung mehr als 256 Nachrichten ausgetauscht werden, so kann der Sendefolgezähler auf das nächste Vielfache von 256 gesetzt werden). Alternativ könnten selbst verständlich auch zwei unabhängige Sendefolgezähler vorgesehen sein. Sollte der Sendefolgezähler für die weitere Kommunikation nicht benötigt werden, könnte im Rahmen der vorliegenden Erfindung auch selbstverständlich auf eine Inkrementierung um "1" zurückgegriffen werden.

Die Erfindung ermöglicht somit die "Wiederbenutzung" einer kryptographischen Sitzung zwischen einem Terminal und einem gegebenen ID-Token, wodurch die Vorteile einer schnellen Authentisierung unter Verwendung der bereits in einer initialen Kommunikation ausgehandelten -- vorzugsweise symmetrischen - Schlüssel beibehalten werden. Dabei verwendet der ID-Token zur Vermeidung einer Verfolgbarkeit keine eindeutige Kennung, sondern ein sitzungsspezifisches randomisiertes Attribut, das beiden Sitzungspartnern für die nächste physische Sitzung zur Verfügung steht. "Sitzungsspezifisch" in diesem Zusammenhang bedeutet, dass das randomisierte Attribut in jeder Sitzung (auch wiederhergestellten Sitzung) neu berechnet wird. Das randomisierte Attribut ist daher für eine mögliche Nachverfolgung des ID-Tokens wertlos. Nach Wiederherstellung des gesicherten Kommunikationskanals können über diesen weitere Verfahrensschritte wie beispielsweise die Prüfung der Identität des Tokeninhabers sowie seiner Berechtigung, auf den gesicherten Bereich zuzugreifen, durchgeführt werden.

**Patentansprüche**

1. Verfahren zur Authentisierung einer Zugangsberechtigung mittels eines Zugangskontrollsystems (100), wobei das Zugangskontrollsystem (100) ein Terminal (120) und einen ID-Token (110) umfasst, die zur Kommunikation miteinander über einen gesicherten Kanal in Form einer Sitzung ausgelegt sind, wobei für die Wiederherstellung der Sitzung zwischen Terminal (120) und ID-Token (110) ein sitzungsspezifisches und auf einer eindeutigen Kennung (TUID) des Terminals (120) basierendes randomisiertes Attribut (RID) erzeugt wird, das zumindest in dem Terminal (120) unter Zuordnung zu einem eigenen spezifischen Sitzungskontext (TSK) gespeichert wird, wobei zu einer Wiederherstellung der Sitzung zwischen dem Terminal (120) und dem ID-Token (110) das Terminal (120) dem ID-Token (110) die eindeutige Terminal-Kennung (TUID) übermittelt, anhand derer der ID-Token (110) sitzungskontextbezogen das zugehörige randomisierte Attribut (RID) ermittelt und an das Terminal (120) sendet.

2. Verfahren nach Anspruch 1, bei dem zu einer Wiederherstellung der Sitzung zwischen dem Terminal (120) und dem ID-Token (110) das Terminal (120) seinen zugehörigen Sitzungskontext (TSK) lädt.

3. Verfahren zum Betreiben eines Terminals (120) eines Zugangskontrollsystems (100) zum Authentisieren einer Zugangsberechtigung , wobei das Terminal (120) zur Kommunikation mit einem ID-Token (110) über einen gesicherten Kanal ausgelegt ist und für die Wiederherstellung eines zukünftigen gesicherten Kommunikationskanals mit diesem ID-Token (110) ein sitzungsspezifisches und auf einer eindeutigen Kennung (TUID) des Terminals (120) basierendes randomisiertes Attribut (RID) unter Zuordnung zu einem eigenen spezifischen Sitzungskontext (TSK) des Terminals (120) speichert, wobei zu einer Wiederherstellung einer Sitzung zwischen dem Terminal (120) und dem ID-Token (110) das Terminal (120) dem ID-Token (110) die eindeutige Terminal-Kennung (TUID) übermittelt und als Antwort auf diese Übermittlung von dem ID-Token (110) dessen randomisiertes Attribut (RID) empfängt.

4. Verfahren nach Anspruch 3, bei dem zu einer Wiederherstellung einer Sitzung zwischen dem Terminal (120) und dem ID-Token (110) das Terminal (120) das randomisierte Attribut (RID) mit dem in dem Terminal (120) abgespeicherten randomisierten Attribut (RID) vergleicht und bei Übereinstimmung den zugehörigen Sitzungskontext (TSK) lädt.

5. Verfahren zum Betreiben eines ID-Tokens (110) zum Authentisieren einer Zugangsberechtigung, wobei der ID-Token (110) zur Kommunikation mit einem Terminal (120) eines Zugangskontrollsystems (100) über einen gesicherten Kanal ausgelegt ist und für die Wiederherstellung eines zukünftigen gesicherten Kommunikationskanals mit diesem Terminal (120) ein sitzungsspezifisches und auf einer eindeutigen Kennung (TUID) des Terminals (120) basierendes randomisiertes Attribut (RID) unter Zuordnung zu einem eigenen spezifischen Sitzungskontext (KSK) des ID-Tokens (110) erstellt, wobei zu einer Wiederherstellung einer Sitzung zwischen dem Terminal (120) und dem ID-Token (110) der ID-Token (110) von dem Terminal (120) dessen eindeutige Terminal-Kennung (TUID) empfängt und anhand dieser sitzungskontextbezogen das zugehörige randomisierte Attribut (RID) ermittelt und an das Terminal (120) sendet.

6. Verfahren nach einem der Ansprüche 1 bis 5, bei dem das randomisierte Attribut (RID) jeweils von dem Terminal (120) und dem ID-Token (110) berechnet wird, oder
bei dem das randomisierte Attribut (RID) von dem ID-Token (110) berechnet und an das Terminal (120) gesendet wird, oder bei dem das randomisierte Attribut (RID) von dem Terminal (120) berechnet und an den ID-Token (110) gesendet wird.

7. Verfahren nach einem der Ansprüche 1 bis 6, bei dem das randomisierte Attribut (RID) auf einem Sendefolgezähler (SSC) und einem eindeutigen Sitzungsmerkmal, bspw. einem gemeinsamen Sitzungsschlüssel (SKEY) des gesicherten Kommunikationskanals, basiert.

8. Verfahren nach einem der Ansprüche 1 bis 7, bei dem das Terminal (120) dem ID-Token (110) zur Erzeugung des randomisierten Attributs (RID) die eindeutige Kennung (TUID) des Terminals (120) sendet.

9. Verfahren nach einem der Ansprüche 1 bis 8, bei dem nach (Wieder-)Herstellung einer Sitzung zwischen Terminal (120) und ID-Token (110) ein aktualisiertes randomisiertes Attribut (RID) erzeugt bzw. berechnet wird, bspw. basierend auf einem inkrementierten Sendefolgezähler (SSC).

10. Computerprogramm mit Programmcodemitteln, um alle Schritte eines Verfahrens nach einem der Ansprüche 3 bis 9 durchzuführen, wenn das Computerprogramm auf einem Terminal (120) eines Zugangskontrollsystems (100) bzw. einem ID-Token (110) bzw. einer entsprechenden Recheneinheit ausgeführt wird.

11. ID-Token (110) mit einer Kommunikationsschnittstelle (112), einem Prozessor (114) und einem computerlesbaren Speichermedium (116), wobei in dem Speichermedium (116) computerlesbare Instruktionen gespeichert sind, die bei Ausführung durch den Prozessor (114) die Durchführung eines Verfahrens nach einem der Ansprüche 5 bis 9 bewirken.

12. Terminal (120) für ein Zugangskontrollsystem (100) zur Authentisierung einer Zugangsberechtigung, wobei das Terminal (120) zur Kommunikation mit einem ID-Token (110) über einen gesicherten Kanal ausgebildet ist und des weiteren einen Prozessor (124) und ein computerlesbares Speichermedium (126) umfasst, wobei in dem Speichermedium (126) computerlesbare Instruktionen gespeichert sind, die bei Ausführung durch den Prozessor (124) die Durchführung eines Verfahrens nach einem der Ansprüche 3 oder 6 bis 9 bewirken.

13. Zugangskontrollsystem (100) zur Authentisierung einer Zugangsberechtigung, mit einem Terminal (120) gemäß Anspruch 12 und mit einem ID-Token (110) gemäß Anspruch 11.

**Claims**

1. Method for authenticating an access authorization by means of an access control system (100), wherein the access control system (100) comprises a terminal (120) and an ID token (110) which are designed to communicate with one another via a secure channel in the form of a session, wherein, in order to re-establish the session between the terminal (120) and the ID token (110), a session-specific randomized attribute (RID) based on a unique identifier (TUID) of the terminal (120) is generated and is stored at least in the terminal (120) with an assignment to its own specific session context (TSK), wherein, in order to re-establish the session between the terminal (120) and the ID token (110), the terminal (120) transmits, to the ID token (110), the unique terminal identifier (TUID), on the basis of which the ID token (110) determines the associated randomized attribute (RID) in a manner based on the session context and sends it to the terminal (120) .

2. Method according to Claim 1, in which, in order to re-establish the session between the terminal (120) and the ID token (110), the terminal (120) loads its associated session context (TSK).

3. Method for operating a terminal (120) of an access control system (100) for authenticating an access authorization, wherein the terminal (120) is designed to communicate with an ID token (110) via a secure channel and, in order to re-establish a future secure communication channel with this ID token (110), stores a session-specific randomized attribute (RID) based on a unique identifier (TUID) of the terminal (120) with an assignment to its own specific session context (TSK) of the terminal (120), wherein, in order to re-establish a session between the terminal (120) and the ID token (110), the terminal (120) transmits the unique terminal identifier (TUID) to the ID token (110) and, in response to this transmission, receives the randomized attribute (RID) of the ID token (110) from the latter.

4. Method according to Claim 3, in which, in order to re-establish a session between the terminal (120) and the ID token (110), the terminal (120) compares the randomized attribute (RID) with the randomized attribute (RID) stored in the terminal (120) and loads the associated session context (TSK) if they match.

5. Method for operating an ID token (110) for authenticating an access authorization, wherein the ID token (110) is designed to communicate with a terminal (120) of an access control system (100) via a secure channel and, in order to re-establish a future secure communication channel with this terminal (120), creates a session-specific randomized attribute (RID) based on a unique identifier (TUID) of the terminal (120) with an assignment to its own specific session context (KSK) of the ID token (110), wherein, in order to re-establish a session between the terminal (120) and the ID token (110), the ID token (110) receives the unique terminal identifier (TUID) of the terminal (120) from the latter and, on the basis of said identifier, determines the associated randomized attribute (RID) in a manner based on the session context and sends it to the terminal (120).

6. Method according to one of Claims 1 to 5, in which the randomized attribute (RID) is respectively calculated by the terminal (120) and the ID token (110), or
   in which the randomized attribute (RID) is calculated by the ID token (110) and is sent to the terminal (120), or in which the randomized attribute (RID) is calculated by the terminal (120) and is sent to the ID token (110).

7. Method according to one of Claims 1 to 6, in which the randomized attribute (RID) is based on a send sequence counter (SSC) and a unique session feature, for example a common session key (SKEY) of the secure communication channel.

8. Method according to one of Claims 1 to 7, in which the terminal (120) sends the unique identifier (TUID) of the terminal (120) to the ID token (110) in order to generate the randomized attribute (RID).

9. Method according to one of Claims 1 to 8, in which, after (re-)establishing a session between the terminal (120) and the ID token (110), an updated randomized attribute (RID) is generated or calculated, for example on the basis of an incremented send sequence counter (SSC).

10. Computer program having program code means for carrying out all steps of a method according to one of Claims 3 to 9 when the computer program is executed on a terminal (120) of an access control system (100) or on an ID token (110) or on a corresponding computing unit.

11. ID token (110) having a communication interface (112), a processor (114) and a computer-readable storage medium (116), wherein the storage medium (116) stores computer-readable instructions which cause a method according to one of Claims 5 to 9 to be carried out when executed by the processor (114).

12. Terminal (120) for an access control system (100) for authenticating an access authorization, wherein the terminal (120) is designed to communicate with an ID token (110) via a secure channel and also comprises a processor (124) and a computer-readable storage medium (126), wherein the storage medium (126) stores computer-readable instructions which cause a method according to one of Claims 3 or 6 to 9 to be carried out when executed by the processor (124).

13. Access control system (100) for authenticating an access authorization, having a terminal (120) according to Claim 12 and having an ID token (110) according to Claim 11.

**Revendications**

1. Procédé permettant d'authentifier une autorisation d'accès au moyen d'un système de contrôle d'accès (100), le système de contrôle d'accès (100) comprenant un terminal (120) et un jeton d'ID (110) qui sont conçus pour communiquer entre eux sous la forme d'une session par un canal sécurisé, dans lequel, pour rétablir la session entre le terminal (120) et le jeton d'ID (110), un attribut randomisé (RID), spécifique à la session et basé sur un identifiant univoque (TUID) du terminal (120), est généré et stocké au moins sur le terminal (120) en association avec un contexte de session spécifique (TSK) propre, dans lequel, pour rétablir la session entre le terminal (120) et le jeton d'ID (110), le terminal (120) transmet au jeton d'ID (110) l'identifiant de terminal univoque (TUID) par lequel le jeton d'ID (110) détermine en fonction du contexte de la session l'attribut randomisé (RID) associé et l'envoie au terminal (120) .

2. Procédé selon la revendication 1, dans lequel, pour rétablir la session entre le terminal (120) et le jeton d'ID (110), le terminal (120) charge son contexte de session (TSK) associé.

3. Procédé d'exploitation d'un terminal (120) d'un système de contrôle d'accès (100) permettant d'authentifier une autorisation d'accès, le terminal (120) étant conçu pour communiquer avec un jeton d'ID (110) sur un canal sécurisé, et pour rétablir un canal de communication sécurisé futur avec ce jeton d'ID (110), stockant un attribut randomisé (RID), spécifique à la session et basé sur un identifiant univoque (TUID) du terminal (120) en association avec un contexte de session spécifique (TSK) propre du terminal (120), dans lequel, pour rétablir une session entre le terminal (120) et le jeton d'ID (110), le terminal (120) transmet au jeton d'ID (110) l'identifiant de terminal univoque (TUID) et reçoit en réponse à cette transmission du jeton d'ID (110) l'attribut randomisé (RID) de celui-ci.

4. Procédé selon la revendication 3, dans lequel, pour rétablir une session entre le terminal (120) et le jeton d'ID (110), le terminal (120) compare l'attribut randomisé (RID) avec l'attribut randomisé (RID) stocké sur le terminal (120), et en cas de concordance, charge le contexte de session (TSK) associé.

5. Procédé d'exploitation d'un jeton d'ID (110) pour authentifier une autorisation d'accès, le jeton d'ID (110) étant conçu pour communiquer avec un terminal (120) d'un système de contrôle d'accès (100) par un canal sécurisé, et pour rétablir un canal de communication sécurisé futur avec ce terminal (120), créant un attribut randomisé (RID), spécifique à la session et basé sur un identifiant univoque (TUID) du terminal (120), en association avec un contexte de session spécifique (KSK) propre du jeton d'ID (110), dans lequel, pour rétablir une session entre le terminal (120) et le jeton d'ID (110), le jeton d'ID (110) reçoit du terminal (120) l'identifiant de terminal univoque (TUID) de celui-ci, et détermine à l'aide de celui-ci l'attribut randomisé (RID) associé en fonction du contexte de session et l'envoie au terminal (120).

6. Procédé selon l'une quelconque des revendications 1 à 5, dans lequel l'attribut randomisé (RID) est calculé respectivement par le terminal (120) et le jeton d'ID (110), ou dans lequel l'attribut randomisé (RID) est calculé par le jeton d'ID (110) et envoyé au terminal (120), ou dans lequel l'attribut randomisé (RID) est calculé par le terminal (120) et envoyé au jeton d'ID (110).

7. Procédé selon l'une quelconque des revendications 1 à 6, dans lequel l'attribut randomisé (RID) est basé sur un compteur de séquence d'envoi (SSC) et une particularité de session univoque, par exemple une clé de session commune (SKEY) du canal de communication sécurisé.

8. Procédé selon l'une quelconque des revendications 1 à 7, dans lequel le terminal (120) envoie l'identifiant univoque (TUID) du terminal (120) au jeton d'ID (110) pour la génération de l'attribut randomisé (RID).

9. Procédé selon l'une quelconque des revendications 1 à 8, dans lequel, après établissement (rétablissement) d'une session entre le terminal (120) et le jeton d'ID (110), un attribut randomisé (RID) mis à jour est généré ou calculé, par exemple sur la base d'un compteur de séquence d'envoi (SSC) incrémenté.

10. Programme informatique comprenant des moyens de code programme pour effectuer toutes les étapes d'un procédé selon l'une quelconque des revendications 3 à 9 si le programme informatique est exécuté sur un terminal (120) d'un système de contrôle d'accès (100) ou un jeton d'ID (110) ou une unité arithmétique correspondante.

**11.** Jeton d'ID (110) comprenant une interface de communication (112), un processeur (114) et un support de stockage lisible par ordinateur (116), des instructions lisibles par ordinateur étant stockées sur le support de stockage (116) qui, lorsqu'elles sont effectuées par le processeur (114), provoquent l'exécution d'un procédé selon l'une quelconque des revendications 5 à 9.

**12.** Terminal (120) pour un système de contrôle d'accès (100) permettant d'authentifier une autorisation d'accès, le terminal (120) étant réalisé pour communiquer avec un jeton d'ID (110) par un canal sécurisé et comprenant en outre un processeur (124) et un support de stockage (126) lisible par ordinateur, des instructions lisibles par ordinateur étant stockées sur le support de stockage (126) qui, lorsqu'elles sont effectuées par le processeur (124), provoquent l'exécution d'un procédé selon l'une quelconque des revendications 3 ou 6 à 9.

**13.** Système de contrôle d'accès (100) permettant d'authentifier une autorisation d'accès, comprenant un terminal (120) selon la revendication 12 et un jeton d'ID (110) selon la revendication 11.

100

110     SC     122   120     N       130

124    126

112

116     114

140

## Fig.1

SC/SKey

110                  120

TUID            S200

S210

RID+KSK             RID+TSK

S220                S230

## Fig.2

Fig.3

EP 3 367 284 B1

Fig.4

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015202308 A1

- US 2008162934 A1

**In der Beschreibung aufgeführte Nicht-Patentliteratur**

- **SALOWEY et al.** *Transport Layer Security (TLS) Session Resumption without Server-Side State; rfc5077.txt*